# EUROPÄISCHE PATENTSCHRIFT

(11) **EP 0 894 818 B1**
(45) Veröffentlichungstag und Bekanntmachung des Hinweises auf die Patenterteilung: **02.03.2005**
(21) Anmeldenummer: 98114089.0
(22) Anmeldetag: 28.07.1998
(51) Int. Cl.: C08J 11/08

(54) **Verfahren zur Wiedergewinnung von löslichen Polymeren oder Polymerengemischen aus kunststoffhaltigen Materialien**
Process for recycling soluble polymers or polymer blends from plastic containing materials
Procédé pour le recyclage de polymères ou mélanges de polymères solubles à partir de matériaux contenant des plastiques

(30) Priorität: 29.07.1997 DE 19732673
(43) Veröffentlichungstag der Anmeldung: 03.02.1999
(73) Patentinhaber: Fraunhofer-Gesellschaft zur Förderung der angewandten Forschung e.V., 80686 München (DE)
(72) Erfinder: Luck, Thomas, Dr.-Ing., 80992 München (DE); Mäurer, Andreas, Dr., 85354 Freising (DE); Knauf, Udo, Dipl.-Ing., 80995 München (DE); Wäsche, Andreas, Dipl.-Ing., 85416 Langenbach (DE); Holley, Wolfgang, Dr.-Ing., 84079 Bruckberg (DE)

(56) Entgegenhaltungen:
- DE-A- 3 135 198
- DE-A- 4 009 308
- DE-A- 4 319 180
- US-A- 5 169 871

## Beschreibung

Gegenstand der vorliegenden Erfindung ist ein Aufbereitungsverfahren zur Wiedergewinnung von löslichen Polymeren oder Polymerengemischen aus kunststoffhaltigen Materialien.

Kunststoffe und kunststoffhaltige Materialien werden in vielen Fällen zur Herstellung von kurzlebigen Wirtschaftsgütern eingesetzt und sie werden damit zu einem gravierenden Abfallproblem. Die Entsorgung bzw. Verwertung kunststoffhaltiger Materialien ist daher insbesondere im Hinblick auf die Verpackungsverordnung (Verordnung über die Vermeidung von Verpackungsabfällen, Bonn 1991) sowie das Kreislaufwirtschaftsgesetz (Gesetz zur Förderung der Kreislaufwirtschaft und Sicherung der umweltverträglichen Beseitigung von Abfällen vom 27.09.1994 (KrW-AbfG)) Gegenstand vielfältiger Bemühungen.

Besonders interessant sind in diesem Zusammenhang die werkstofflichen Recycling-Verfahren, die zur Herstellung neuer Rohstoffe aus den zu recyclisierenden Materialien führen. So werden beispielsweise sortenreine, saubere Kunststoffabfälle, wie sie oft in der kunststoffproduzierenden oder -verarbeitenden Industrie anfallen, fast vollständig in die Produktion zurückgeführt, indem sie umgeschmolzen und regranuliert werden (Regeneratverarbeitung). Dahingegen sind mit den bekannten Verwertungsverfahren aus gemischten und/oder verschmutzten Kunststoffabfällen, wie sie beispielsweise aus dem Elektronik- oder Automobilbereich nach Gebrauch im Gewerbe- oder Hausmüll anfallen, oftmals nur recyclisierte Rohstoffe zu erhalten, die neben den primären Rohstoffen unerwünschte Bestandteile aufweisen und deren Eigenschaften verglichen mit denen der Primärkunststoffe nicht identisch sind.

Bei den in die Kunststoffmatrix eingelagerten unerwünschten Bestandteilen kann es sich beispielsweise um Fremdpolymere, um bei der Verarbeitung zugesetzte Additive, um während der Gebrauchs- oder Erfassungsphase immigrierte oder entstandene Stoffe oder um Schadstoffe z.B. heute zu vermeidende Additivierung mit Cd-Pigmenten, polybromierten Diphenylen, Blei- und Zinnstabilisatoren etc. handeln. Die unerwünschten Bestandteile lassen sich bezüglich ihres störenden Einflusses auf die Verarbeitung, auf die Recyclateigenschaften (insbesondere bezüglich der Rheologie), auf die optischen Eigenschaften oder bezüglich ihrer Toxikologie unterscheiden. Für die Verarbeitung des recyclisierten Polymers sowie für seine Eigenschaften sind beispielsweise Melt-Flow-Index (MFI), Schmelztemperatur und Vernetzungsgrad verantwortlich; diese können durch unerwünschte Bestandteile negativ beeinflußt werden. Beispiele für störende toxikologische Bestandteile sind polycyclische aromatische Kohlenwasserstoffe (PAK), polyhalogenierte Aromaten, Schwermetalle etc. Störende optische Eigenschaften werden durch zugesetzte Farbstoffe oder Oxidationserscheinungen des zu recyclisierenden kunststoffhaltigen Materials verursacht.

Eine Möglichkeit zur Wiedergewinnung von sortenreinen Kunststoffen beschreibt die DE 40 09 496 A1. Hier werden die sortenunreinen, kunststoffhaltigen Abfälle gelöst und die resultierende Lösung wird mit einem die Löslichkeit reduzierenden Fällungsmittel versetzt.

Die JP 63-309537 A beschreibt ein Verfahren, bei dem Fluorcarbonharze in einem organischen Lösungsmittel gelöst und als Partikel gefällt werden, indem die Lösung direkt (d.h. ohne Reinigungsschritt) in einem Nichtlösungsmittel verteilt wird.

Die DE 44 44 247 A1 und die DE 44 38 447 A1 beschreiben Verfahren zur Recyclisierung von Polyarylensulfid (PAS), bei dem PAS-haltiges Material mit einem Lösungsmittel behandelt und anschließend das Polymer in einem flüssigen Medium gefällt wird, indem man die Polymerlösung in ein Nichtlösungsmittel eintropft.

Die US 4,003,880 beschreibt die Separation und Wiedergewinnung von Polyestern aus gemischtem Fasermaterial. Hierbei werden die Polyesterfasern in einem für Polyester typischen Lösungsmittel gelöst, und unlösliche Fasern werden aus der Lösung entfernt, bevor der Polyester aus der Lösung schlagartig gefällt wird.

Aus der JP 07-103324 A ist eine Regenerationsmethode für Polyvinylchloridabfall bekannt, bei der Polyvinylchloridabfall unter Entfernung eines unlöslichen Anteils gelöst und anschließend in ein nicht-wäßriges Fällungsmedium gegeben wird.

Alle diese Verfahren haben den Nachteil, daß die ausgefällten Polymerpartikel unerwünschte Einschlüsse aufweisen. Durch Fällungsmittelüberschuß an der Tropfenoberfläche kommt es zur Krustenbildung und damit zum unerwünschten Einschluß von Lösungsmittelmolekülen sowie von ebenfalls gelösten niedrigmolekularen Oligomeren und anderen, gelösten sowie fein dispergierten Verunreinigungen. Auch werden bei den Verfahren bevorzugt halogenhaltige und/oder aromatische Lösungsmittel eingesetzt, die toxikologisch nicht unbedenklich sind.

Aus der DE 40 22 011 C2 ist ein Verfahren bekannt, bei dem polycarbonathaltige Abfälle in den für Polycarbonate üblichen Lösungsmitteln aufgeschlämmt und über eine spezielle Drucknutsche abfiltriert werden. Anschließend wird die Polymerlösung wie bei der Primärsynthese des Polycarbonats durch Abdampfen des Lösungsmittels weiterverarbeitet. Bei diesem Verfahren sind die nach dem Reinigungsschritt noch vorhandenen unerwünschten, aber löslichen Bestandteile auch im recyclisierten Polymer enthalten, da nur das Lösungsmittel abgedampft wird.

Die DE 40 09 308 A1 beschreibt ein Verfahren, bei dem nach dem Reinigen der Polymerlösung mit Aktivkohle das Lösungsmittel abdestilliert wird.

Bei dem Verfahren zur Wiedergewinnung von löslichen Kunststoffen nach der DE 40 33 604 C2 wird das zu recyclisierende Polymer durch schlagartiges Verdampfen des Lösungsmittels freigesetzt, indem die benötigte Verdampfungsenergie durch das heiße Fällungsmittel eingebracht wird.

Die US 5,278,282 beschreibt ein Verfahren zur Trennung von Polymeren aus einem Polymerengemisch durch fraktioniertes Lösen bei steigenden Temperaturen und anschließendes Isolieren des gewünschten Polymers beispielsweise durch flash-Verdampfung.

Die zuletzt beschriebenen Verfahren, bei denen die Lösungsmittel bei erhöhten Temperaturen entfernt werden, zeigen einige Nachteile. Einerseits weisen die Zielpolymere nach dem Abdampfen der Lösungsmittel durch die noch vorhandenen unerwünschten Bestandteile der Polymerlösung Verunreinigungen bzw. Einschlüsse auf. Des weiteren treten durch die erhöhten Temperaturen bei der Lösungsmittelentfernung beachtliche Energiekosten und bedingt durch die Gefahr erhöhter Emissionen ein höherer apparatetechnischer (Investitions-) Aufwand sowie erhöhte oxidative Vernetzungen der recyclisierten Polymere auf.

Die DE 31 35 198 A beschreibt ein Verfahren zur Herstellung von PVC-Partikeln, bei dem eine PVC-Lösung mit einem 100 °C bis 180 ° heißen bewegten Nichtlösungsmittel versetzt wird. Durch das Inkontaktbringen mit einem erwärmten Nichtlösungsmittel werden die PVC-Partikel ausgefällt, wobei gleichzeitig das Lösungsmittel abdestilliert. Durch das rasche Verdampfen des Lösungsmittels ist es möglich, voluminöse, nicht klebende PVC-Partikel herzustellen.

In der US-A-5 169 871 wird ein Verfahren zur Herstellung von hoch-porösen Polymerpulvern aus nicht oder schlecht schmelzenden Kunststoffen mit folgenden Verfahrensschritten beschrieben:
i) Lösen des Polymers
ii) gleichzeitiges Versprühen der Polymerlösung und des Fällmittels, wobei die beiden Sprühnebel so ausgerichtet werden, dass eine Aggregationszone entsteht, in der sich Polymer- und Fällmittelsprühnebel vermischen
iii) Abtrennen und Trocknen des gefällten Polymers
Da bestimmte Kunststoffe aufgrund ihrer hohen Schmelztemperaturen nicht ohne Probleme den üblichen Kunststoffverarbeitungsverfahren wie Spritzgießen oder Extrudieren zugänglich sind, wird in der US-A-5 169 871 vorgeschlagen, die nach dem o.g. Verfahren hergestellten Polymerpulver durch Kompaktieren in Formkörper zu überführen.

Die DE 40 09 308 A beschreibt ein Verfahren zur Reinigung von Polymerabfällen, bei dem feste Verunreinigungen durch Filtration über Seesand entfernt werden. Durch das Zumischen von Koagulationshilfsmitteln wie Tonerden, Kieselgur, Bleicherden, Aktivbleicherden und Aktivkohlepulver kann ein Teil der löslichen Verunreinigungen wie beispielsweise Farbstoffe entfernt werden.

Ein anderes Verfahren zur Wiederaufarbeitung von bevorzugt Polyolefinen wird von M. Lüling in Kunststoffe 85 (1995) S.230 beschrieben. Hier werden die zu recyclisierenden Kunststoffe zerkleinert und die störenden Bestandteile extrahiert. Nachteile dieses Verfahrens sind, daß unlösliche Verschmutzungen gar nicht und von den im Extraktionsmittel löslichen unerwünschten Bestandteilen nur die äußerlich am Polymer anhaftenden wirksam abgereichert werden können. Auch stellen die häufig eingesetzten aromatischen Lösungsmittel ein ökotoxikologisches Gefährdungspotential dar.

Aufgabe der vorliegenden Erfindung ist es daher, ein Verfahren zur Wiedergewinnung von Polymeren oder Polymerengemischen aus kunststoffhaltigen Materialien bereitzustellen, das die Nachteile des Standes der Technik nicht aufweist.

Dementsprechend ist es Aufgabe der vorliegenden Erfindung, ein Verfahren anzugeben, mit dem die störenden Einflüsse von in die Kunststoffmatrix ein- oder angelagerten Bestandteilen auf Verarbeitung und/oder thermische und mechanische Recyclateigenschaften und/oder optische Eigenschaften des Zielpolymers oder -polymerengemischs beseitigt und/oder störende toxikologisch relevante Bestandteile, wie z.B. polycyclische aromatische Kohlenwasserstoffe (PAK), polyhalogenierte Aromaten, Schwermetalle etc., entfernt werden können.

Aufgabe der vorliegenden Erfindung ist es des weiteren, aus verschiedenartigsten kunststoffhaltigen Materialien ein Zielpolymer oder -polymerengemisch unter Entfernung aller unerwünschten Bestandteile, wie beispielsweise Fremdpolymere, bei der Verarbeitung zugesetzte Additive, während der Herstellung, Verarbeitung, Gebrauchs- und/oder Erfassungsphase immigrierte oder entstandene Stoffe, Schadstoffe etc. wiederzugewinnen.

Dabei soll das Recyclat verglichen mit Neuware originäre Eigenschaften, wie z.B. gleiche thermische und mechanische Kennwerte, besitzen, und umweltverträglich sein. Zusätzlich soll das recyclisierte Polymer oder Polymerengemisch compoundierbar also auf konventionellen Kunststoffverarbeitungsmaschinen verarbeitbar sein.

Weiterhin ist es Aufgabe der vorliegenden Erfindung ein Verfahren zu entwickeln, daß energiearm und kostengünstig durchführbar ist.

Gelöst wird diese Aufgabe durch ein Verfahren, bei dem zuerst das Zielpolymer oder -polymerengemisch durch ein Lösungsmittel oder Lösungsmittelgemisch selektiv aus dem kunststoffhaltigen Material herausgelöst wird. Aus der resultierenden Lösung werden anschließend unerwünschte Bestandteile entfernt: zuerst werden die im Lösungsmittel unlöslichen Bestandteile des kunststoffhaltigen Materials abgetrennt und dann werden die löslichen Bestandteile der Polymerlösung nach üblichen, dem Fachmann geläufigen Reinigungsschritten entfernt. Aus der nun resultierenden vorgereinigten Polymerlösung wird das Zielpolymer oder -polymerengemisch durch ein Fällungsmittel in einem Fällaggregat und in Anwesenheit eines Gases oder Gasgemischs unter turbulenter Vermischung selektiv gefällt, abgetrennt und anschließend getrocknet. Hierbei erfolgt die Fällung wie in Anspruchs 1 angegeben.

Geeignete selektive Lösungsmittel zur Durchführung des erfindungsgemäßen Verfahrens lösen bevorzugt das Zielpolymer oder -polymerengemisch ohne Veränderung der chemischen Bindungen und nicht die unerwünschten Bestandteile. Geeignete selektive Fällungsmittel setzen die Löslichkeit des Zielpolymers oder -polymerengemischs herab und sind mit dem Lösungsmittel oder Lösungsmittelgemisch mischbar. Der Fachmann auf dem Gebiet der Polymere ist aufgrund seiner Fachwissens in der Lage, für jedes Zielpolymer oder -polymerengemisch eine spezifische, optimal geeignete Kombination von Lösungsmittel und Fällungsmittel zu verwenden (z.B. Kunststoff Handbuch, Bd. 1: Die Kunststoffe; hrsg. von G.W. Becker u. D. Braun; München, Wien, Hanser, 1990, S. 842 ff).

Vorteil des erfindungsgemäßen Verfahrens ist die Gewinnung von Polymeren oder Polymergemischen, die keine unerwünschten Bestandteile, wie z.B. Fremdpolymere, Additive, während der Gebrauchsphase immigrierte oder entstandene Stoffe, Schadstoffe etc. mehr enthalten.

Ein weiterer Vorteil des erfindungsgemäßen Verfahrens ist, daß es lösungsmittelbasiert abläuft, d.h. Zielpolymer oder -polymerengemisch liegen in Form von einzelnen, in Lösung befindlichen Makromolekülen vor. Dadurch können sowohl äußerlich anhaftende wie auch - im Gegensatz zu Umschmelzverfahren - in der Kunststoffmatrix eingelagerte unerwünschte Bestandteile vom Zielpolymer oder -polymerengemisch abgetrennt werden, wodurch nach der erfindungsgemäßen Kombination der Verfahrensschritte eine sehr hohe Reinigungswirkung erzielt wird, die deutlich größer als die der bekannten Verfahren ist. Mit dem erfindungsgemäßen Verfahren sind also Recyclate erhältlich, deren Eigenschaftsprofile sehr weitgehend denen nicht-additivierter Neuware entsprechen.

Im ersten Schritt des erfindungsgemäßen Verfahrens wird das zu recyclisierende Polymer oder Polymerengemisch aus dem kunststoffhaltigen Material selektiv herausgelöst. Die Bedingungen hierfür, wie z.B. geeignetes Lösungsmittel oder -gemisch, geeigneter pH-Wert, geeignete Temperatur, geeignete Polarität, geeigneter Druck, etc., sind von den Anforderungen des jeweiligen Anwendungsfalles abhängig, d.h. von der Art der zu lösenden Polymere oder des Polymerengemischs und können vom Polymerfachmann aufgrund seiner Kenntnisse z.B. mit Hilfe einschlägiger Tabellenwerke leicht ermittelt werden (z.B.: A. Krause, A. Lange, Kunststoff-Bestimmungsmöglichkeiten, 3. Aufl., München, Hanser, 1979; D.O. Hummel, F.K. Scholl, Atlas der Polymer- und Kunststoffanalyse, Bd. 1: Polymere, Struktur und Spektrum, Bd. 2a und b: Kunststoffe, Fasern, Kautschuk, Harze - Spektren I und II, Bd. 3: Zusatzstoffe und Verarbeitungsmittel, 2. Aufl., München, Weinheim, Hanser, Verlag Chemie, 1978-1988; H. Dexheimer, O. Fuchs in K.A. Wolf, Struktur und physikalisches Verhalten der Kunststoffe, Berlin, Göttingen, Heidelberg, Springer, 1962). Vorher können die kunstoffhaltigen Materialien gegebenenfalls zerkleinert und eventuell vorhandene Grobteile beispielsweise durch Windsichten aussortiert werden.

Kunststoffhaltige Materialien in Sinne der Erfindung sind Materialien, die lösliche Polymere oder Polymerengemische enthalten. Bevorzugt ist die Wiedergewinnung von Thermoplasten wie z.B. von Polystyrolen einschließlich seiner Copolymere, von Polyacrylaten und -methacrylaten, Polyvinylacetaten, Polyvinylacetalen, Polyvinylchloriden, linearen Polyestern (insbesondere Polyethylenterephthalat und Polybutylenterephthalat), Polycarbonaten etc. und deren Blends.

Geeignete Lösungsmittel zur Durchführung des erfindungsgemäßen Verfahrens sind solche Lösungsmittel, die bevorzugt das Zielpolymer oder -polymerengemisch ohne Veränderung der chemischen Bindungen und nicht die unerwünschten Bestandteile lösen. Bevorzugt sind organische, nicht-aromatische Lösungsmittel, die im Gegensatz zu den nach dem Stand der Technik eingesetzten aromatischen Lösungsmitteln neben toxikologischen auch verfahrenstechnische Vorteile bieten. Im allgemeinen sind nicht-aromatische organische Lösungsmittel verglichen mit aromatischen Lösungsmitteln weniger toxisch und daher liegt eine niedrigere Wassergefährdungsklasse vor. Hierdurch sind nach der TA-Luft geringere Investitionskosten für Abwasser- und Abluftreinigung erforderlich, weil die höheren Grenzwerte mit weniger verfahrenstechnischem Aufwand sicher zu realisieren sind und damit die Genehmigung nach BlmSchG leichter zu erhalten ist. Ein weiterer verfahrenstechnischer Vorteil ist die bessere Mischbarkeit des Lösungsmittels mit dem bevorzugten Fällungsmittel (Wasser oder wasserhaltige Lösungen) und dadurch bedingt eine vollständigere Fällung des Polymers oder Polymerengemischs ohne Einschlüsse und mit guter Möglichkeit das gefällte Produkt und Prozeßrückstände nachzuwaschen und damit das Lösungsmittel einfach zu entfernen.

Besonders bevorzugte Lösungsmittel um z.B. Polystyrole (PS), modifizierte Polystyrole oder Styrolcopolymere - insbesondere Acrylnitril-Butadien-Styrol-Copolymere (ABS) - sowie Polyacrylate, Polymethacrylate (PMA) oder Polymethylmethacrylate (PMMA), Polyvinylacetate, Polyvinylacetale, Polyvinylchloride (PVC), lineare Polyester - insbesondere Polyethylenterephthalat (PET) und Polybutylenterephthalat (PBT) -, Polycarbonate (PC) oder deren Blends zu lösen, sind halogenfreie polare Lösungsmittel, deren Toxizität verglichen mit derjenigen der nach dem Stand der Technik verwendeten halogenhaltigen Lösungsmittel deutlich geringer ist.

Geeignete halogenfreie Lösungsmittel sind beispielsweise Alkohole, Ketone, Ether oder Ester, wobei Ethanol und/oder tert.-Butanol und/oder Aceton und/oder Butanon und/oder Tetrahydrofuran und/oder Essigsäureethylester bevorzugt werden.

Ohne Einschränkung der Allgemeinheit lassen sich Polyvinylchloride (PVC) beispielsweise in Tetrahydrofuran und/oder in cyclischen Ketonen, insbesondere in Cyclopentanon oder Cyclohexanon, besonders geeignet lösen.

Überraschenderweise wurde gefunden, daß die organischen Lösungsmittel bis zu 10% Wasser enthalten dürfen, ohne das nachteilige Auswirkungen auf die Effektivität der nachfolgenden Verfahrensschritte auftreten. Insbesondere ist dies der Fall, wenn es sich bei dem organischen Lösungsmittel um Aceton handelt. Hierdurch bedingt kann das Lösungs-/Fällungsmittelgemisch später energiegünstiger, z.B. durch Rektifikation, wiederaufbereitet werden und so problemlos im Kreislauf gefahren werden.

In post-consumer-Abfällen von kunststoffhaltigen Materialien liegen immer Verunreinigungen bzw. unerwünschte Bestandteile vor, d.h. in diesem Fall müssen immer Reinigungsschritte durchgeführt werden. Für sortenreine Produktionsabfälle, die keine Verbundwerkstoffe sind, ist ein Umschmelzverfahren billiger.

Von der nach der selektiven Extraktion resultierenden Lösung werden alle unlöslichen Bestandteile, beispielsweise Fremdpolymere, durch übliche fest-flüssig-Trennungsverfahren abgetrennt. Bevorzugte Trennverfahren sind Filtrieren, Zentrifugieren, Dekantieren, Sedimentieren oder Sieben.

In einer bevorzugten Verfahrensvariante wird der gegebenenfalls vorhandene Extraktionsrückstand dann einer Nachextraktion mit dem verwendeten Lösungsmittel und gegebenenfalls anschließend einer Nachwäsche mit Wasser oder wasserhaltigen Lösungen unterzogen. Dadurch wird der Rückstand der unlöslichen Bestandteile weitgehend lösungsmittelfrei gewaschen. Die Nachextraktion führt vorteilhafterweise zu einer größeren Ausbeute an erfindungsgemäß wiedergewonnenem Polymer oder Polymerengemisch. Des weiteren werden die Kosten für die Entsorgung der unerwünschten unlöslichen Bestandteile reduziert und deren Handhabung wird einfacher bzw. Transportbestimmungen sind leichter einzuhalten, da es sich bei dem noch anhaftenden Restlösungsmittel um Wasser oder wasserhaltige Lösungen, nicht aber um möglicherweise explosionsfähige Lösungsmittelgemische handelt.

Die resultierende vorgereinigte Lösung des Zielpolymers wird einem oder mehreren Reinigungsverfahren unterzogen, um unerwünschte lösliche Bestandteile zu entfernen. Die Reinigung der Polymerlösung erfolgt nach üblichen Methoden z.B. durch Adsorptions- und Desorptionsverfahren, bevorzugt durch Chromatographie und/oder Festphasenextraktion und/oder flüssigflüssig-Extraktion.

Zur Reinigung der Polymerlösung mittels Chromatographie wird bevorzugt die Gelpermeationschromatographie (GPC) verwendet. Die Festphasenextraktion der unerwünschten Bestandteile erfolgt bevorzugt mit Kohlenstoff. Beide Reinigungsverfahren sind besonders zur Entfernung bromierter Schadstoffe geeignet, wie z.B. von polybromierten Dibenzodioxinen (PBDD) oder Dibenzofuranen (PBDF), die bei der Verarbeitung beispielsweise bei der Extrusion sehr leicht aus den als Flammschutzmittel zugesetzten polybromierten Kohlenwasserstoffen, wie z.B. polybromierten Diphenylethern (PBDE) oder Tetrabrombisphenol-A (TBBA) entstehen. Dabei wird beim Entfernen der bromierten Schadstoffe das selektive Adsorptionsverhalten des modifizierten Graphits für planare Ringsysteme, wie Dioxine und Furane genutzt.

Der große Vorteil des erfindungsgemäßen Verfahrens liegt darin, daß aus mit löslichen und/oder unlöslichen Bestandteilen verunreinigten Polymerlösungen Polymere oder Polymerengemische wiedergewonnen werden können, deren Eigenschaftsprofile denjenigen von nicht-additivierter Neuware entsprechen.

Nach der Reinigung wird das Zielpolymer oder -polymerengemisch aus der resultierenden Polymerlösung mit Hilfe eines Fällungsmittels oder Fällungsmittelgemischs, das die Löslichkeit des Zielpolymers oder -polymerengemischs herabsetzt und das mit dem Lösungsmittel oder Lösungsmittelgemisch mischbar ist, in Anwesenheit eines Gases oder Gasgemischs und unter turbulenter Vermischung selektiv gefällt. Diese Vorgehensweise erhöht verglichen mit dem Entfernen des Lösungsmittels oder Lösungsmittelgemischs nach dem Stand der Technik die Reinigungswirkung des erfindungsgemäßen Verfahrens und damit die Recyclat-Eigenschaften erheblich: Die nach dem Reinigen noch in Lösung verbliebenen unerwünschten Bestandteile bleiben im Fall des erfindungsgemäßen Verfahrens weiterhin in Lösung und verunreinigen somit nicht das Recyclat.

Der Fachmann auf dem Gebiet der Polymere ist aufgrund seines Fachwissens in der Lage, für jedes Zielpolymer oder -polymerengemisch eine spezifische, optimal geeignete Kombination von Lösungsmittel und Fällungsmittel zu verwenden. Geeignete selektive Fällungsmittel setzen die Löslichkeit des Zielpolymers oder -polymerengemischs herab und sind mit dem Lösungsmittel oder Lösungsmittelgemisch mischbar. Sie können vom Polymerfachmann aufgrund seiner Kenntnisse leicht ermittelt werden.

Geeignete selektive Fällungmittel für das Zielpolymer oder -polymerengemisch sind z.B. Wasser oder wasserhaltige Lösungen.

Protonierbare Polymere wie z.B. Polyacrylate, PMA und Copolymere, werden besonders bevorzugt in alkalischen Medien (pH 10-13) gelöst und in sauren wieder ausgefällt (pH 2-6).

Lineare Polyester, wie beispielsweise PET, PBT und deren Blends, können durch Wasser oder wasserhaltige Lösungen wieder ausgefällt werden. Vorzugsweise erfolgt ihre selektive Ausfällung aber mit Hilfe eines Temperaturgradienten, indem die ggf. gereinigte Polymerlösung abgekühlt wird, vorzugsweise auf Raumtemperatur, und anschließend gegebenenfalls noch in Lösung befindlicher Polyester mit unpolaren Fällungsmitteln und/oder mit Wasser nachgefällt wird. Geeignete unpolare Fällungsmittel sind niedermolekularen n- und/oder iso-Alkane mit 4-10 C-Atomen (Benzine).

Polycarbonate werden bevorzugt in nicht-polaren Lösungsmitteln oder mit kaltem (zur Minimierung der Esterhydrolyse) Wasser wieder ausgefällt. Geeignete unpolare Fällungsmittel sind niedermolekularen n- und/oder iso-Alkane mit 4-10 C-Atomen (Benzine).

Überraschenderweise wurde gefunden, daß bei Verwendung einer Mischung von organischen Lösungsmitteln und Wasser als Fällungsmittel bereits geringe Wassermengen ausreichen, um ausgefällte Polymerpartikel zu erhalten, deren Oberflächen nicht klebrig sind und die sich daher leicht aus der resultierenden Fällungssuspension abtrennen lassen. Dabei darf der Lösungsmittelgehalt im Wasser bis zu 50% betragen. Dies gilt insbesondere, wenn bei der Wiedergewinnung von Polystyrolen und seinen Copolymeren Aceton als Lösungsmittel verwendet wird. Bedingt durch den hohen Lösungsmittelanteil im Fällungsmittel können erhebliche Energiekosten bei der Rektifikation des Lösungs-/Fällungsmittelgemisches eingespart werden.

Das Fällaggregat ist der Reaktionsraum, in dem das Zielpolymer oder -polymerengemisch ausfällt. Die selektive Fällung des Zielpolymers oder -polymerengemischs erfolgt bei Temperaturen, die in Abhängigkeit von dem im Fällaggregat herrschenden Druck unterhalb der Siedepunkte von Lösungsmittel und Fällungsmittel liegen. Unter diesen Verfahrensbedingungen sind also Lösungs- und Fällungsmittel flüssig. Besonders bevorzugt erfolgt die Fällung bei Raumtemperatur. Durch die niedrigen Temperaturen wird ein schlagartiges Verdampfen des Lösungsmittels und damit eine erneute An- bzw. Einlagerung noch vorhandener unerwünschter löslicher Bestandteile in die gefällte Polymermatrix verhindert. Weitere Vorteile der niedrigen Fälltemperatur sind die Einsparung von Energiekosten sowie die Verringerung der oxidativen Vernetzungen des Zielpolymers oder -polymerengemischs.

Bei der selektiven Fällung des Zielpolymers oder -polymerengemischs werden die Polymerlösung und das Fällungsmittel sowie das Gas oder Gasgemisch in das Fällaggregat eingebracht. Hierbei befindet sich das Fällungsmittel im Fällaggregat und die Polymerlösung wird in Anwesenheit eines Gases oder Gasgemischs in das Fällungsmittel eingebracht.

Das Einbringen der Polymerlösung sowie des Gases oder Gasgemischs erfolgt unter turbulenter Vermischung. Vorteilhafterweise kommt es hierbei zu einer besseren Vereinzelung und Verteilung der Tropfen und dadurch zu einer besseren Vermischung. Insbesondere in Gegenwart eines Gases oder Gasgemischs ist die turbulente Vermischung sehr gut. Erfindungsgemäß wird durch die gute turbulente Vermischung der Gehalt an Lösungsmitteleinschlüssen im gefällten Zielpolymer oder -polymerengemisch minimiert und eine optimale Partikelgröße (0,1 - 5 mm) für die anschließende fest-flüssig-Trennung der Polymersuspension erhalten. Dadurch werden der nachfolgende Entfeuchtungsaufwand begrenzt sowie die Kosten reduziert und die verfahrenstechnische Handhabbarkeit des Recyclats gewährleistet. Daneben trägt diese Art der Fällung dazu bei, Oxidationen des Zielpolymers oder -polymerengemischs zu verhindern.

Das für die selektive Fällung des Zielpolymers oder -polymerengemischs notwendige Einbringen der Polymerlösung und des Gases oder Gasgemischs in das Fällaggregat geschieht unter Verwendung einer oder mehrerer Düsen. Bevorzugt wird anstelle mehrerer Düsen eine Mehrstoffdüse verwendet, da sie besser dazu geeignet ist, die Polymerlösung mit dem Fällungsmittel und gegebenenfalls mit dem Gas oder Gasgemisch effizient turbulent zu vermischen. Bevorzugt wird als Gas oder Gasgemisch ein Inertgas oder Luft verwendet. Als Inertgas kann hierbei beispielsweise Stickstoff oder ein Edelgas eingesetzt werden. Um gewünschte pH-Änderungen für den Ausfällvorgang leicht durchzuführen, werden als Gas bevorzugt CO₂ oder NH₃ (bei im sauren Milieu löslichen Polymeren) gegebenenfalls in Verbindung mit einem Inertgas verwendet.

Abschließend wird das aus der Polymersuspension bevorzugt durch Filtration abgetrennte Zielpolymer oder -polymerengemisch gegebenenfalls getrocknet und kann als Recyclat mit annähernd originären Eigenschaften wieder neu verarbeitet also extrudiert bzw. compoundiert werden.

Überraschenderweise wurde festgesteift. daß die mit dem erfindungsgemäßen Verfahren hergestellten Partikel des Zielpolymers oder -polymerengemischs nur minimierte Anteile an unerwünschten Bestandteilen und Lösungsmitteln aufweisen. Recyclateigenschaften und optische Eigenschaften weisen überraschenderweise keinen störenden Einfluß von in die Kunststoffmatrix eingelagerten Bestandteilen, wie z.B. Fremdpolymeren, bei der Verarbeitung zugesetzten Additiven, während der Gebrauchs- oder Erfassungsphase immigrierten oder entstandenen Stoffen, Schadstoffen etc., auf. Auch die für die Verarbeitung wichtigen Eigenschaften, wie z.B. MFI, Schmelztemperatur und Vernetzungsgrad, zeigen verglichen mit den primären Rohstoffen annähernd gleiche Kennwerte. Störende toxikologische Bestandteile, wie z.B. polycyclische aromatische Kohlenwasserstoffe (PAK), polyhalogenierte Aromaten, Schwermetalle etc., können mit dem erfindungsgemäßen Verfahren überraschenderweise fast vollständig entfernt werden.

Nach dem Stand der Technik zeigen die bei der Fällung entstehenden Polymerpartikel an deren Oberfläche meist eine Krustenbildung, die weiteren diffusen Transport von eingeschlossenen Lösungsmittelmolekülen behindert. Überraschenderweise wurde gefunden, daß mit dem erfindungsgemäßen Verfahren die hergestellten Partikel des Zielpolymers oder -polymerengemischs keine Krusten an der Oberfläche der bei der Fällung entstehenden Polymerpartikel bilden und somit der weitere diffuse Transport von Lösungsmittelmolekülen ermöglicht wird.

Des weiteren wurde überraschenderweise festgestellt, daß das selektiv gefällte Zielpolymer oder -polymerengemisch in für die fest-flüssig-Trennung optimaler Partikelgröße vorliegt und keine oxidativen Vernetzungen aufweist.

Überraschenderweise wurde festgestellt, daß durch der erfindungsgemäßen Kombination der Verfahrensschritte eine sehr hohe Reinigungswirkung erzielt wird, die deutlich größer als die der nach dem Stand der Technik bekannten Verfahren ist. Mit dem erfindungsgemäßen Verfahren sind also Recyclate erhältlich, deren Eigenschaftsprofile, wie z.B. die thermischen und mechanischen Kennwerte, sehr weitgehend denen nicht-additivierter Neuware entsprechen und die daher compoundierbar sind.

Auch ist das Verfahren verglichen mit dem Stand der Technik energiearm und kostengünstig durchzuführen.

Ohne Einschränkung der Allgemeinheit wird das erfindungsgemäße Verfahren anhand von Ausführungsbeispielen näher erläutert.

### Vergleichsbeispiel

Zum Lösen des Polymers wird ein zylindrisches 4-Hals-Glasgefäß mit einem Nutzvolumen von 3,0 l verwendet. Über den 4-Hals-Deckel sind über Schliffhälse ein Thermometer, ein Rückflußkühler und ein Rührverschluß mit einer von oben eingeführten Rührwelle (d=10 mm) angeschlossen. Als Rührer wird ein 4-Blatt-Rührer (D=60 mm) eingesetzt. Die vierte Öffnung dient der Material- bzw. Lösungsmittelzugabe und/oder der Probennahme. Mittels eines temperierten Wasserbad wird der Inhalt des Glasgefäßes bei 40°C gehalten. Durch den Rückflußkühler werden Lösungsmittelverluste minimiert. Bei etwa 300 U/min und 40°C wird innerhalb von 40 min eine ca. 30%ige ABS-Lösung in Aceton hergestellt (720g ABS in 1,68 kg Aceton). Da in diesem Versuch Neuware bzw. unverschmutztes Material eingesetzt wurde, fand eine Reinigung nicht statt.

Die Fällung des Polymers erfolgt durch Reduzierung der Löslichkeit von ABS in Aceton durch Zugabe von soviel Wasser, daß der Wasseranteil bezogen auf das in der Lösung vorhandene Aceton größer als ca. 10% ist. In der Regel wird zur Fällung Wasser bei Raumtemperatur eingesetzt, um ein schlagartiges Verdampfen des Acetons (Siedetemperatur 56°C) zu verhindern. Ein Verdampfen des Acetons hätte ein Verbleiben von Verunreinigungen im resultierenden ausgefällten Polymer zur Folge. Die in Aceton löslichen Verunreinigungen sollen jedoch weiterhin gelöst bleiben und mit der flüssigen Phase (Aceton-Wasser-Gemisch) aus dem gefällten Polymer entfernt werden.

Mittels einer Zweistoffdüse (Treibmedium: Druckluft, 8 bar; Lackierpistole") wird die 30%ige Polymerlösung auf einen Wasserrieselfilm (ca. 10 l/min) aufgesprüht (ca. 0,2 l/min). Die entstehenden Polymerpartikel besitzen eine körnige Konsistenz und schwimmen auf der Wasseroberfläche des Vorlagengefäßes, das unterhalb des Rieselfilms angebracht ist. Von der resultierenden Suspension wird das ausgefallene ABS durch ein feinmaschiges Drahtgewebe (0,1 mm) von der flüssigen Phase (Wasser-Aceton-Gemisch) abgetrennt. Das Verhältnis von Fällungslösung zu Polymerlösung ist etwa 50:1 und der Durchsatz etwa 60 g ABS /min bezogen auf festes, trockenes ABS.

Das nach der Fällung resultierende Polymer oder Polymerengemisch wird mittels einer Korbspindelpresse (D = 130 mm, H = 150 mm) auf ca. 35% Trockensubstanz (TS) entwässert. Die entwässerten Kunststoffflocken werden zunächst an der Luft bei ca. 25°C und ab ca. 90% TS im Trockenschrank bei 70°C getrocknet. Zum erneuten Compoundieren müssen die Flocken in einer Schneidmühle (Rotoplex 28/28, Fa. Alpine, Augsburg) gemahlen und im doppelwandigen Pflugscharmischer (Fa. Lödige) zu Partikeln festerer Konsistenz agglomeriert werden, da ansonsten das Material schlecht rieselfähig und so eine Befüllung des Extruders über die Zuführschnecken nicht möglich ist.

Der MFI des recyclisierten ABS beträgt 36g/10min (vgl. MFI des Ausgangsmaterials: 37g/10min).

### Beispiel 1

Eine analog Beispiel 1 hergestellte und gereinigte 30%ige ABS-Lösung in Aceton (ca. 20°C) wird zur Fällung des Polymers ca. 20 cm unterhalb der Wasseroberfläche mittels einer Zweistoffdüse (Treibmedium: Druckluft, 8 bar; Lackierpistole") in ein mit Wasser (ca. 20°C) gefülltes Vorlagegefäß (ca. 200 l Inhalt) eingesprüht. Es werden ca. 5 I Polymerlösung in ca. 10 min versprüht, wobei weder Ablagerungen noch eine Verstopfung in der Zweistoffdüse festgestellt werden. Der Acetongehalt der resultierenden Suspension kann bis zu 50% betragen, ohne daß die Qualität des ausgefällten Produktes oder der Ausfällvorgang selbst verschlechtert werden. Das ausgefällte ABS fällt in Form von faserigen Flocken (ca. 1-3 cm lang) an, die auf der Wasseroberfläche schwimmen und mittels eines feinmaschigen Drahtgewebes (170 µm) problemlos von der flüssigen Phase (Wasser-Aceton-Gemisch) abgetrennt werden können. Das Verhältnis von Fällungslösung zu Polymerlösung ist 40:1 und der Durchsatz etwa 150 g ABS /min. Abpressen, Trocknen und Compoundieren erfolgt wieder analog zu Beispiel 1. Durch das Abpressen mit der Korbspindelpresse können TS-Werte von ca. 30% erreicht werden.

In den resultierenden Polymerflocken wird ein Acetongehalt von 0,04% bei Fällung aus 50%iger Acetonlösung und von 2 ppm bei Fällung aus 1,7%iger Acetonlösung nachgewiesen. Mittels IR-Spektroskopie wird kein Unterschied zwischen Neuware und Recyclat festgestellt. Der MFI (220°C/10kg) der recyclisierten ABS-Flocken und des aus den Flocken hergestellten Granulats liegt bei 36g/10min (vgl. MFI der Neuware: 37g/10min).

### Beispiel 2

Eine analog Beispiel 1 hergestellte und gereinigte 30%ige ABS-Lösung in Aceton wird durch den Seitenanschluß (Saugeingang) einer mit Leitungswasser betriebenen Wasserstrahlpumpe (3,3 l/min) als apparatetechnische Ausführung eines statischen Mischers angesaugt (ca. 1,2 l/min) und gelangt im gefällten Zustand aus der Wasserstrahlpumpe in ein Vorlagengefäß. Das ausgefällte ABS fällt dabei in Form einer Wurst" an, die kontinuierlich aus der Wasserstrahlpumpe austritt. Die Abtrennung von der flüssigen Phase (Wasser-Aceton-Gemisch) ist daher sehr einfach und nahezu verlustfrei. Das Verhältnis von Fällungslösung zu Polymerlösung ist 3:1 (wegen Feuchtigkeitsaustrag mit dem Produkt sind minimal 1,7:1 möglich) und der Durchsatz etwa 400 g ABS /min. Abpressen, Trocknen und Compoundieren erfolgt wieder analog zu Beispiel 1. Durch das Abpressen mit der Korbspindelpresse können TS-Werte von ca. 35% erreicht werden.

Der MFI des recyclisierten ABS beträgt 36g/10min (vgl. MFI des Ausgangsmaterials: 37g/10min).

### Beispiel 3

Analog Beispiel 1 wird bei 25°C innerhalb von 60 min eine Lösung von 5,3 kg post-consumer-ABS (nach Gebrauch geschredderte Haushaltsklein- und Informationstechnologiegeräte) in 12,4 kg Aceton hergestellt (25% TS-Gehalt). Der unlösliche Rückstand wird mittels Filtration durch ein 1 mm Grobsieb abgetrennt. Die resultierende grauschwarze Suspension wird mittels eines 0,1 mm Feinsiebes und/oder alternativ mittels einer Zentrifuge (5 min, 10000 x g) oder eines Dekanters gereinigt. Der abgetrennte Schlamm (150 g) enthält fein dispergierte Fremdpolymere sowie Lackschichtbestandteile (die Lackschicht der post-consumer-ABS-Abfälle zerbröselt beim Auflösen in ca. 0,5 mm große Bestandteile, die sich sedimentieren lassen). Eine Feinreinigung der überstehenden (vorgereinigten) Polymerlösung erfolgt durch 40 µm Filterkerzen. Die Fällung des Polymers erfolgt analog Beispiel 1 mittels eines Wasserrieselfilms (für 20 l Polymerlösung werden 20 l Wasser als Fällungsmittel im Kreislauf geführt). Abpressen, Trocknen und Compoundieren erfolgt ebenfalls analog zu Beispiel 1.

Alternative Fällung des Polymers analog zu Beispiel 2 oder 3 führt zu einem recyclisierten Produkt mit gleichen Eigenschaften.

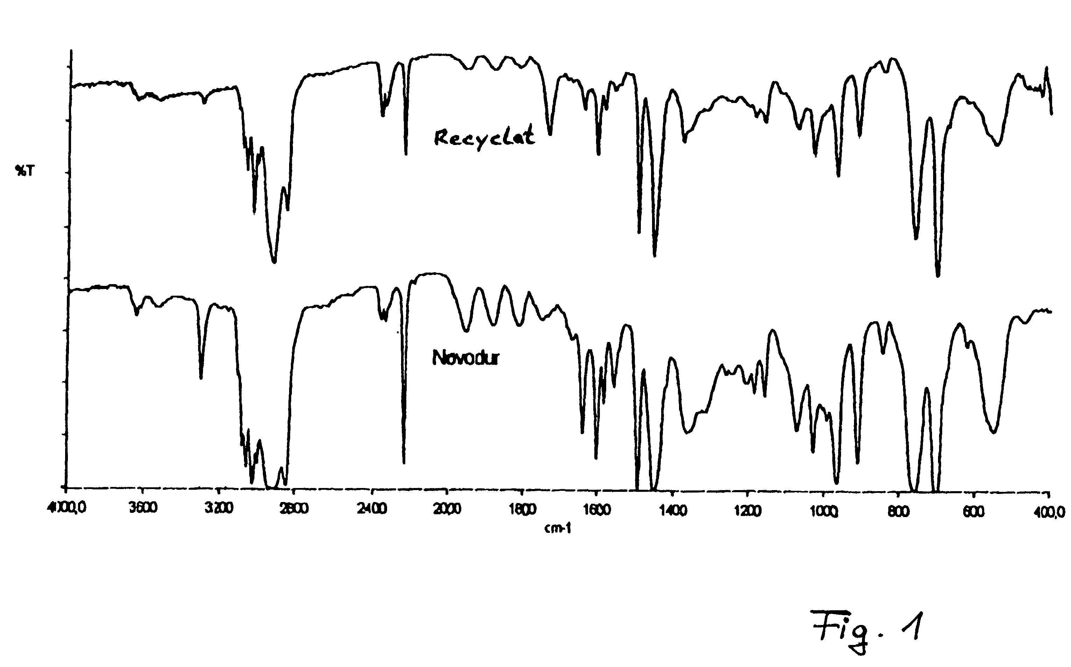

Mittels IR-Spektroskopie wird kein Unterschied zwischen Neuware und Recyclat festgestellt. Figur 1 zeigt die IR-Spektren von nach dem erfindungsgemäßen Verfahren recyclisiertem post-consumer-ABS (oben) und neuwertigem ABS (Novodur P2H-AT®, unten).

Die nachfolgende Tabelle zeigt einen Vergleich der Zugprüfungen an Knochen (Einspannlänge 80 mm, Geschwindigkeit 88 mm/min) von Novodur P2H-AT® (ABS-Neuware von Bayer), von nach dem Stand der Technik wiedergewonnem post-consumer-ABS (nach Gebrauch geschredderte Haushaltsklein- und Informationstechnologiegeräte; konventionell mechanisch nach dem Schwimm-Sink-Verfahren aufbereitet) und von nach dem erfindungsgemäßen Verfahren wiedergewonnenem post-consumer-ABS:

| | **Novodur P2H-AT®** | **mechanisch recyclisiert** | **erfindungsgemäß recyclisiert** |
|---|---|---|---|
| E-Modul [MPa] | 1658 | 2293 | 1228 |
| max. Kraft [kN] | 1432 | 1548 | 1618 |
| Dehnung an der Streckgrenze[%] | 3,2 | 3,0 | 3,0 |
| Streckspannung [MPa] | 35,78 | 38,71 | 40,48 |
| Bruchdehnung [%] | 14,8 | 4,0 | 11,3 |
| Bruchkraft [N] | 1268 | 1431 | 1378 |

### Beispiel 4

In einem 2l-Dreihalskolben mit Thermometer, Intensivkühler, Dimrothkühler, Wasserbad und Magnetrührer werden bei Raumtemperatur innerhalb von 1 Stunde 150 g Weich-PVC-Fußbodenbelag (Neuware) in 600 g THF gelöst. Die resultierende Suspension wird nach 4 stündigem Sedimentieren vom Füllstoff Kreide abdekantiert. Anschließend wird die vorgereinigte Polymerlösung analog zu Beispiel 1 gefällt. Abpressen, Trocknen und Compoundieren erfolgt ebenfalls analog zu Beispiel 1.

### Beispiel 5

In einem 2l-Dreihalskolben mit Thermometer, Intensivkühler, Dimrothkühler, Wasserbad und Magnetrührer werden bei 40°C innerhalb von 50 min 180 g Weich-PVC-Fußbodenbelag (post-consumer-PVC mit anhaftenden Kleberesten) in 600 g THF gelöst. Die resultierende Suspension wird durch Zentrifugieren (5 min, 4000 x g) vom Füllstoff Kreide abgetrennt. Anschließend wird die vorgereinigte Polymerlösung über eine Aktivkohleschüttung (d = 10 mm) abgenutscht und analog zu Beispiel 1 gefällt. Abpressen, Trocknen und Compoundieren erfolgt ebenfalls analog zu Beispiel 1.

Die durchgeführten TG-Messungen (Thermogravimetrie-Messungen) zeigen das für PVC typische Bild einer zweistufigen Zersetzung (Masseverluste 63,8% bzw. 26,3% mit DTG-Maxima bei 276°C bzw. bei 455°C).

### Beispiel 6

In einem 2l-Dreihalskolben mit Thermometer, Intensivkühler, Dimrothkühler, Wasserbad und KPG-Rührer werden bei 45°C innerhalb von 45 min 200 g post-consumer-Abfall aus ABS-PC-Blend (nach Gebrauch geschredderte Computergehäuse) in 600 g Butanon gelöst. Die resultierende Suspension wird durch Zentrifugieren (10 min, 10000 x g) vom Füllstoff Glasfaser abgetrennt. Anschließend wird die vorgereinigte Polymerlösung analog zu Beispiel 1 gefällt. Abpressen, Trocknen und Compoundieren erfolgt ebenfalls analog zu Beispiel 1.

Mittels IR-Spektroskopie wird kein Unterschied zwischen Neuware und Recyclat festgestellt. Auch der MFI des recyclisierten ABS-PC-Blends stimmt innerhalb der Fehlergrenzen mit demjenigen der Neuware überein.

### Beispiel 7

In einem 2l-Dreihalskolben mit Thermometer, Intensivkühler, Dimrothkühler, Ölbad und Ankerrührer werden unter Rückfluß innerhalb von 35 min 100 g Polyvinylbutyral-Abfälle aus Kfz-Windschutzscheiben in 500 ml Ethanol gelöst. Die resultierende Suspension wird durch Grobfiltration und Feinfiltration (0,05 mm Filterkerzen) und/oder Dekantieren von Glassplittern und Gummi- bzw. Kleberresten gereinigt. Anschließend wird die vorgereinigte Polymerlösung analog zu Beispiel 1 gefällt. Abpressen, Trocknen und Compoundieren erfolgt ebenfalls analog zu Beispiel 1.

### Beispiel 8

In einem 2l-Dreihalskolben mit Thermometer, Intensivkühler, Dimrothkühler, Ölbad und Ankerrührer werden unter Rückfluß (ca. 210°C) innerhalb von 35 min 100 g Polyethylenterephthalat-Flaschenschredder in 500 ml DBE gelöst (DBE = Dibasic Ester: technisches Gemisch aus Adipinsäuredimethylester (10-25 Gew.-%), Glutarsäuredimethylester (55-65 Gew.-%) und Bernsteinsäuredimethylester (15-25 Gew.-%)). Die resultierende Suspension wird durch Grobfiltration (0,5 mm Sieb) gereinigt. Nach dem Abkühlen wird das schon ausgefallene Polyethylenterephthalat abfiltriert (ca. 80%) und anschließend wird aus der resultierenden Lösung analog zu Beispiel 1 das noch in Lösung verbliebene Polyethylenterephthalat nachgefällt. Abpressen, Trocknen und Compoundieren erfolgt ebenfalls analog zu Beispiel 1.

### Beispiel 9

In einem 2l-Dreihalskolben mit Thermometer, Intensivkühler, Dimrothkühler, Ölbad und Ankerrührer werden bei 210°C innerhalb von 35 min 100 g flexible Leiterplatinenfolien aus einem Polyethylenterephthalat-Kupfer-Verbund in 500 ml DBE gelöst. Aus der resultierenden Suspension wird durch Grobfiltration (0,5 mm Sieb) das Kupfer abgetrennt. Nach dem Abkühlen wird das schon ausgefallene Polyethylenterephthalat abfiltriert (ca. 80%) und anschließend wird aus der resultierenden Lösung analog zu Beispiel 1 das noch in Lösung verbliebene Polyethylenterephthalat nachgefällt. Abpressen, Trocknen und Compoundieren erfolgt ebenfalls analog zu Beispiel 1.

## Patentansprüche

1. Verfahren zur Wiedergewinnung von löslichen Polymeren oder Polymerengemischen aus kunststoffhaltigen Materialien mit folgenden Merkmalen:
- das Zielpolymer oder -polymerengemisch wird selektiv aus dem kunststoffhaltigen Material gelöst;
- von der resultierenden Lösung werden die unerwünschten unlöslichen und / oder unerwünschten löslichen Bestandteile abgetrennt;
- aus der resultierenden Polymerlösung wird mit Hilfe eines Fällungsmittels in einem Fällaggregat und in Anwesenheit eines Gases oder Gasgemisches unter turbulenter Vermischung das Zielpolymer oder -polymerengemisch selektiv gefällt, wobei die Polymerlösung und das Gas oder Gasgemisch durch eine oder mehrere Düsen in das Fällaggregat eingebracht werden und wobei die selektive Fällung des Zielpolymers oder -polymerengemisches bei Temperaturen erfolgt, die bei dem im Fällaggregat herrschenden Druck unterhalb der Siedepunkte von Lösungsmittel und Fällungsmittel liegen;
- das ausgefällte Zielpolymer oder -polymerengemisch wird von der flüssigen Phase abgetrennt;
- das Zielpolymer oder -polymerengemisch wird gegebenenfalls getrocknet.

2. Verfahren nach Anspruch 1,
**dadurch gekennzeichnet, daß** aus den unlöslichen Bestandteilen, die nach dem selektiven Lösen des Zielpolymers oder -polymerengemisches aus der resultierenden Suspension abgetrennt wurden, weiteres Zielpolymer oder - polymerengemisch gelöst wird und/oder die unlöslichen Bestandteilen anschließend einer Nachwäsche mit Wasser unterzogen werden.

3. Verfahren nach Anspruch 1 oder 2,
**dadurch gekennzeichnet, daß** die Polymerlösung zur Entfernung von unerwünschten löslichen Bestandteilen einer Chromatographie, vorzugsweise einer Gelpermeationschromatographie, und/oder einer Festphasenextraktion, vorzugsweise mit Kohlenstoff, und/oder einer flüssigflüssig-Extraktion unterzogen wird.

4. Verfahren nach einem oder mehreren der Ansprüche 1 bis 3,
**dadurch gekennzeichnet, daß** als Gas oder Gasgemisch CO₂ oder NH₃ und/oder ein Inertgas und/oder Luft verwendet wird.

5. Verfahren nach einem oder mehreren der Ansprüche 1 bis 4 zur Wiedergewinnung von Polystyrolen, modifizierten Polystyrolen, Styrolcopolymeren, Polyvinylchloriden, Polyvinylacetaten und/oder Polyvinylacetalen,
**dadurch gekennzeichnet, daß** als Lösungsmittel halogenfreie Lösungsmittel und als Fällungsmittel Wasser oder wasserhaltige Lösungen verwendet werden.

6. Verfahren nach einem oder mehreren der Ansprüche 1 bis 4 zur Wiedergewinnung von Polyacrylaten, Polymethacrylaten und/oder Polymethylmethacrylaten,
**dadurch gekennzeichnet, daß** als Lösungsmittel halogenfreie Lösungsmittel oder alkalische wasserhaltige Lösungen und als Fällungsmittel Wasser oder saure wasserhaltige Lösungen verwendet werden.

7. Verfahren nach einem oder mehreren der Ansprüche 1 bis 7 zur Wiedergewinnung von linearen Polyestern,
**dadurch gekennzeichnet, daß** als Lösungsmittel halogenfreie Lösungsmittel verwendet werden,
und daß zur Fällung als Fällungsmittel Wasser oder wasserhaltige Lösungen verwendet werden
oder daß die Fällung mit Hilfe eines Temperaturgradienten erfolgt, indem die Polymerlösung abgekühlt wird, und daß gegebenenfalls eine Nachfällung mit Wasser oder wasserhaltigen Lösungen oder niedermolekularen n- und/oder iso-Alkanen mit 4-10 C-Atomen erfolgt.

8. Verfahren nach einem oder mehreren der Ansprüche 1 bis 4 zur Wiedergewinnung von Polycarbonaten,
**dadurch gekennzeichnet, daß** als Lösungsmittel halogenfreie polare organische Lösungsmittel und als Fällungsmittel Wasser oder wasserhaltige Lösungen oder niedermolekulare n- und/oder iso-Alkane mit 4-10 C-Atomen verwendet werden.

9. Verfahren nach einem der Ansprüche 5 bis 8,
**dadurch gekennzeichnet, daß** als halogenfreies Lösungsmittel Ethanol und/oder tert.-Butanol und/oder Aceton und/oder Butanon und/oder Tetrahydrofuran und/oder cyclische Ketone und/oder Essigsäureethylester verwendet wird.

10. Verfahren nach einem oder mehreren der Ansprüche 5 bis 9,
**dadurch gekennzeichnet, daß** als Lösungsmittel organische Lösungsmittel mit bis zu 10% Wassergehalt und/oder als Fällungsmittel Wasser mit bis zu 50% Lösungsmittelgehalt verwendet wird.

11. Verfahren nach einem oder mehreren der Ansprüche 1 bis 10,
**dadurch gekennzeichnet, daß** das Zielpolymer oder-polymerengemisch selektiv aus dem kunststoffhaltigen Material gelöst wird, daß von der resultierenden Suspension unlösliche Bestandteile abgetrennt werden, daß aus der resultierenden Polymerlösung gelöste Verunreinigungen entfernt werden, daß aus der resultierenden Polymerlösung mit Hilfe eines Fällungsmittels in einem Fällaggregat und in Anwesenheit eines Gases oder Gasgemischs unter turbulenter Vermischung das Zielpolymer oder -polymerengemisch selektiv gefällt wird, daß das ausgefällte Zielpolymer oder -polymerengemisch von der flüssigen Phase abgetrennt wird, und daß das Zielpolymer oder -polymerengemisch gegebenenfalls getrocknet wird.

## Claims

1. Process for recycling soluble polymers or polymer mixtures from materials containing plastic with the following features:
• the target polymer or polymer mixture is selectively dissolved out of the material containing plastic;
• the unwanted insoluble and/or unwanted soluble constituents are separated from the resulting solution;
• with the aid of a precipitant the target polymer or polymer mixture is selectively precipitated out of the resulting polymer solution by turbulent agitation in a precipitator and in the presence of a gas or gas mixture, wherein the polymer solution and the gas or gas mixture are fed into the precipitator through one or more nozzles, and wherein the selective precipitation of the target polymer or polymer mixture is conducted at temperatures, which lie below the boiling points of the solvent and the precipitant at the pressure prevailing in the precipitator;
• the precipitated target polymer or polymer mixture is separated from the liquid phase;
• the target polymer or polymer mixture is dried, if necessary.

2. Process according to Claim 1, **characterised in that** further target polymer or polymer mixture is dissolved out of the insoluble constituents, which were separated out of the resulting suspension after the target polymer or polymer mixture was selectively dissolved, and/or the insoluble constituents are subsequently subjected to a rewash with water.

3. Process according to Claim 1 or 2, **characterised in that** to remove unwanted soluble constituents, the polymer solution is subjected to chromatography, preferably gel permeation chromatography, and/or a solid-phase extraction, preferably with carbon, and/or a liquid-liquid extraction.

4. Process according to one or more of Claims 1 to 3, **characterised in that** CO₂ or NH₃ and/or an inert gas and/or air is used as gas or gas mixture.

5. Process according to one or more of Claims 1 to 4 for recycling polystyrenes, modified polystyrenes, styrene copolymers, polyvinyl chlorides, polyvinyl acetates and/or polyvinyl acetals, **characterised in that** halogen-free solvents are used as solvent and water or aqueous solutions are used as precipitant.

6. Process according to one or more of Claims 1 to 4 for recycling polyacrylates, polymethacrylates and/or polymethyl methacrylates, **characterised in that** halogen-free solvents or alkaline aqueous solutions are used as solvent and water or acid aqueous solutions are used as precipitant.

7. Process according to one or more of Claims 1 to 4 for recycling linear polyesters, **characterised in that** halogen-free solvents are used as solvent, and that water or aqueous solutions are used as precipitant for precipitation, or that precipitation is conducted by means of temperature gradients by cooling the polymer solution, and that, if necessary, a post-precipitation is conducted with water or aqueous solutions or low-molecular n- and/or iso-alkanes with 4-10 C atoms.

8. Process according to one or more of Claims 1 to 4 for recycling polycarbonates, **characterised in that** halogen-free polar organic solvents are used as solvent, and that water or aqueous solutions or low-molecular n- and/or isoalkanes with 4-10 C atoms are used as precipitant.

9. Process according to one of Claims 5 to 8, **characterised in that** ethanol and/or tert-butanol and/or acetone and/or butanone and/or tetrahydrofuran and/or cyclic ketones and/or ethyl acetate is used as halogen-free solvent.

10. Process according to one or more of Claims 5 to 9, **characterised in that** organic solvents with a water content of up to 10% are used as solvent and/or water with a solvent content of up to 50% is used as precipitant.

11. Process according to one or more or Claims 1 to 10, **characterised in that** the target polymer or polymer mixture is selectively dissolved out of the material containing plastic. that insoluble constituents are separated from the resulling suspension, that dissolved contaminants are removed from the resulting polymer solution, that with the aid of a precipitant the target polymer or polymer mixture is selectively precipitated out of the resulting polymer solution by turbulent agitation in a precipitator and in the presence of a gas or gas mixture, that the precipitated target polymer or polymer mixture is separated from the liquid phase, and that the target polymer or polymer mixture is dried, if necessary.

## Revendications

1. Procédé pour la récupération de polymères ou de mélanges de polymères solubles à partir de matériaux contenant des plastiques, comportant les étapes caractéristiques suivantes :
- on dissout sélectivement le polymère ou le mélange de polymères recherché à partir de la matière contenant des plastiques,
- on sépare, de la solution résultante, les constituants insolubles indésirables et/ou solubles indésirables,
- à partir de la solution de polymère résultante, à l'aide d'un agent de précipitation dans un appareil de précipitation et en présence d'un gaz ou d'un mélange de gaz on précipite sélectivement avec mélange turbulent le polymère ou le mélange de polymères recherché, la solution de polymère et le gaz ou le mélange de gaz étant introduits par une ou plusieurs buse(s) dans l'appareil de précipitation et la précipitation sélective du polymère ou du mélange de polymères recherché ayant lieu à des températures qui, sous la pression régnant dans l'appareil de précipitation, se trouvent en dessous des points d'ébullition du solvant et de l'agent de précipitation,
- on sépare le polymère ou le mélange de polymères recherché précipité de la phase liquide,
- on sèche, le cas échéant, le polymère ou le mélange de polymères recherché.

2. Procédé selon la revendication 1,
**caractérisé en ce qu'**
à partir des constituants insolubles qui ont été séparés de la suspension résultante après la dissolution sélective du polymère ou du mélange de polymères recherché, on dissout encore du polymère ou du mélange de polymères et/ou on soumet ensuite les constituants insolubles à un lavage supplémentaire avec de l'eau.

3. Procédé selon la revendication 1 ou 2,
**caractérisé en ce que**
pour l'élimination des constituants solubles indésirables, on soumet la solution de polymère à une chromatographie, de préférence une chromatographie avec perméation de gel et/ou à une extraction en phase solide, de préférence avec du carbone, et/ou à une extraction du type liquide - liquide.

4. Procédé selon une ou plusieurs des revendications 1 à 3,
**caractérisé en ce que**
comme gaz ou mélange de gaz, on utilise CO₂ ou NH₃, et/ou un gaz inerte et/ou l'air.

5. Procédé selon une ou plusieurs des revendications 1 à 4, pour la récupération de polystyrènes, polystyrènes modifiés, copolymères de styrène, polychlorures de vinyle, polyacétates de vinyle et/ou povinylacétals,
**caractérisé en ce que**
comme solvants, on utilise des solvants non halogénés, et, comme agents de précipitation on utilise, l'eau ou des solutions aqueuses.

6. Procédé selon une ou plusieurs des revendications 1 à 4 pour la récupération de polyacrylates, polyméthacrylates et/ou polyméthacrylates de méthyle,
**caractérisé en ce que**
comme solvants, on utilise des solvants non halogénés ou des solutions aqueuses alcalines et, comme agents de précipitation, on utilise l'eau ou des solutions aqueuses acides.

7. Procédé selon une ou plusieurs des revendications 1 à 7 pour la récupération de polyesters linéaires,
**caractérisé en ce que**
comme solvants, on utilise des solvants non halogénés,
et comme agents de précipitation pour la précipitation, on utilise l'eau ou des solutions aqueuses, ou bien
la précipitation a lieu à l'aide d'un gradient de température, avec refroidissement de la solution de polymère, et une précipitation supplémentaire a lieu, le cas échéant, avec de l'eau ou des solutions aqueuses ou des n- et/ou isoalcanes de faible poids moléculaire, comportant 4 à 10 atomes de carbone.

8. Procédé selon une ou plusieurs des revendications 1 à 4 pour la récupération de polycarbonates,
**caractérisé en ce que**
comme solvants, on utilise des solvants organiques polaires non halogénés et, comme agents de précipitation, on utilise l'eau ou des solutions aqueuses ou des n- et/ou iso-alcanes de faible poids moléculaire comportant 4 - 10 atomes de carbone.

9. Procédé selon une ou plusieurs des revendications 5 à 8,
**caractérisé en ce que**
comme solvants non halogénés, on utilise l'éthanol et/ou le tert-butanol et/ou l'acétone et/ou la butanone et/ou le tétrahydrofuranne et/ou des cétones cycliques et/ou l'ester éthylique de l'acide acétique.

10. Procédé selon une ou plusieurs des revendications 5 à 9,
**caractérisé en ce que**
comme solvants, on utilise des solvants organiques contenant jusqu'à 10 % de teneur en eau et/ou, comme agent de précipitation, on utilise de l'eau contenant jusqu'à 50 % de teneur en solvant.

11. Procédé selon une ou plusieurs des revendications 1 à 10.
**caractérisé en ce que**
- on dissout sélectivement le polymère ou le mélange de polymères recherché à partir de la matière contenant des plastiques, on sépare de la suspension résultante les constituants insolubles, on élimine de la solution de polymère(s) résultante les impuretés dissoutes, et à partir de la solution de polymère(s) résultante, à l'aide d'un agent de précipitation dans un appareil de précipitation et en présence d'un gaz ou d'un mélange de gaz on précipite sélectivement avec mélange turbulent le polymère ou le mélange de polymères recherché, on sépare le polymère ou le mélange de polymères précipité de la phase liquide et on sèche le cas échéant le polymère ou le mélange de polymères recherché.
